# EUROPÄISCHE PATENTANMELDUNG

(11) **EP 1 186 375 A2**
(43) Veröffentlichungstag der Anmeldung: **13.03.2002**
(21) Anmeldenummer: 01250313.2
(22) Anmeldetag: 03.09.2001
(51) Int. Cl.: B23Q 7/04

(54) **Greifer mit vier radial nach aussen bewegbaren Greifbacken**

(30) Priorität: 04.09.2000 DE 10044527; 28.09.2000 DE 10049729
(71) Anmelder: Demag Cranes & Components GmbH, 58300 Wetter (DE)
(72) Erfinder: Ostholt, Rüdiger, 58300 Wetter (DE)
(74) Vertreter: Meissner, Peter E., Dipl.-Ing.

(57) **Zusammenfassung**

Die Erfindung betrifft einen Greifer mit vier radial bewegbaren Greifbacken für mit einer Tragöffnung versehene Lasten, mit einem Rahmen, in dem die Greifbacken in vier radial nach außen verlaufende Schächten beweglich geführt sind, mit einem mittig zwischen Längsträgern des Rahmens parallel zu diesen angeordneten Dorn, der sich innerhalb des Rahmens zumindest über einen Teil seiner Länge nach unten konisch verjüngt und mittels einer Kolben-Zylindereinheit längsverschiebbar ist, wobei die Greifbacken jeweils radial kraftbeaufschlagt von einer Rückstellfeder am Dorn anliegen und wobei die Anlageflächen der Greifbacken zumindest im Anlagebereich komplementär zur Mantelfläche des Dorns ausgebildet sind und jede Greifbacke (13) aus einem plattenförmigen Mittelelement (18) und mindestens zwei parallelen, an diesem seitlich angeordneten plattenförmigen Seitenelementen (19) gebildet ist, die jeweils eine zur Außenseite der Greifbacke (13) weisende Vertiefung (21) aufweisen, deren Querschnitt jeweils mit Blickrichtung auf die Seitenfläche des Seitenelements (19) vorzugsweise ein gleichschenkliges Dreieck ist.

## Beschreibung

Die Erfindung betrifft einen Greifer mit vier nach außen bewegbaren Greifbacken gemäß dem Oberbegriff des Anspruchs 1.

Greifer mit vier Greifbacken sind allgemein bekannt, insbesondere für von oben zu greifende und mit einer zylindrischen Tragöffnung versehene Lasten. Dabei werden die Greifbacken in die Tragöffnung eingeführt und zum Klemmen der Last radial nach außen bewegt. Die Greifbacken sind in vier radial nach außen verlaufenden Schächten eines einstückigen Rahmens geführt. Die Schächte befinden sich zwischen vier Längsträgern des Rahmens, welche an ihren oberen und unteren Enden jeweils mit einer Platte miteinander verbunden sind. Die Längsträger verlaufen parallel zueinander und sind im gleichen radialen Abstand sowie bezogen auf die Rahmenmittellinie im gleichen Winkelabstand angeordnet. Der Rahmen verhindert, dass sich die Greifbacken in Längsrichtung des Rahmens verschieben können, d. h. sie sind so geführt, dass lediglich eine radiale Bewegung möglich ist. Die Greifbacken liegen von Rückstellfedern kraftbeaufschlagt am Dom an. Die Betätigung der Greifbacken erfolgt mittels eines längs durch den Rahmen geführten, von einer Kolben-Zylinder-Einheit längsverschiebbaren Dorns, der sich mit einem Ende über den Rahmen hinaus erstreckt und innerhalb des Rahmens einen sich konisch verjüngenden Bereich aufweist. Im Verjüngungsbereich des Dorns weisen die Greifbacken einen korrespondierenden Verlauf komplementär zur Mantelfläche des Dorns auf. Auf diese Weise wird sichergestellt, dass eine Längsverschiebung des Dorns in eine radiale Bewegung der Greifbacken umgewandelt wird.

Der Nachteil der bekannten Greifer besteht darin, dass diese aus einem Rahmen sowie Greifbacken bestehen, die aufwendig hergestellt sind, was mit erheblichen Kosten verbunden ist.

Aufgabe der Erfindung ist es, einen Greifer vorzuschlagen, der mit geringerem Fertigungs- und Montageaufwand kostengünstig herstellbar ist.

Die Lösung dieser Aufgabe ist durch die im Anspruch 1 angegebenen Merkmale gegeben. Durch die kennzeichnenden Merkmale der Unteransprüche ist der Greifer in vorteilhafter Weise weiter ausgestaltet.

Die Lösung sieht vor, dass jede Greifbacke aus einem plattenförmigen Mittelelement und mindestens zwei an diesem seitlich parallel angeordneten plattenförmigen Seitenelementen gebildet ist, also drei parallelen Platten, wobei die Seitenelemente beidseitig zur Außenseite hin eine Vertiefung aufweisen. Die Vertiefung weist entweder einen Querschnitt nach Art eines gleichschenkligen Dreiecks mit einer parallel zu den Längsträgem verlaufenden Basisseite und zwei nach innen zum Dorn hin gerichteten kleineren gleichlangen Dachseiten auf, wobei die beiden Enden der Basisseite mit Aufnahmen für die Enden einer einsetzbaren Blattfeder versehen sind, an deren Außenseite mittig ein am zugeordneten Längsträger vorgesehenes, in die Vertiefung eingreifendes Spannelement anliegt. Bei einer zweiten Ausführung weist der Querschnitt der Vertiefung einen weg vom Dorn in die Vertiefung hinein gerichteten Vorsprung auf, dem eine parallel zu den Längsträgem verlaufende Längsseite gegenüberliegt, zu der die Blattfeder im entspannten Zustand parallel verläuft. Der Vorsprung liegt etwa auf Höhe der Blattfedermitte. An den Enden der Blattfeder ist je ein in die Vertiefung eingreifendes, am zugeordneten Längsträger angeordnetes Spannelement befestigt. Das Spannelement und der Vorsprung bewirkt jeweils eine zur Bewegung der Greifbacke nach außen korrespondierende Rückstellkraft. Die Stirnelemente sind aus Blechen und die Längsträger sind entweder aus Längsprofilen oder aus den Schenkeln von mindestens vier u-förmigen Blechen gebildet, die unter Belassung eines zentralen Freiraums jeweils um einen Winkel von 90 Grad um die Längsachse des Dorns versetzt zueinander angeordnet sind. Diese Blechteilausführung ist sehr kostengünstig herstellbar und kann wahlweise mit ebenfalls sehr preisgünstigen Längsprofilen, z.B. Winkelprofilen, versehen werden. Letzteres sieht darüber hinaus auch angenehmer aus.

Ein Auswechseln der Greifer lässt sich mit geringem Aufwand vornehmen, wenn die Kolben-Zylinder-Einheit mittels eines Verschlusses nach Art eines Bajonettverschlusses mit dem oberen Stimelement verbindbar ist.

Hierzu ist es zweckmäßig, wenn der Dorn aus einem oberen und einem unteren Dornelement gebildet ist, welche lösbar miteinander verbindbar sind, wobei das obere Dornelement in der Kolben-Zylinder-Einheit an das untere im Rahmen angeordnet ist.

Eine konstruktiv einfache Ausführung des Verschlusses sieht vor, dass dieser aus an der Kolben-Zylindereinheit angeordneten, sich in Zylinderlängsrichtung über die Außenkontur hinaus erstreckenden zapfenförmigen Verschlusselementen mit verdicktem Ende gebildet ist, die in korrespondierende sich in Umfangsrichtung verjüngende Durchgangsöffnungen des Stimelements hindurchsteckbar und durch Verdrehung der gesamten Kolben-Zylindereinheit in die Verjüngung hineindrehbar sind.

Um eine Lösung dieser Verbindung zwischen Kolben-Zylinder-Einheit und Rahmen zu verhindern, ist vorgesehen, dass zur Verriegelung an der Kolben-Zylindereinheit ein Verriegelungselement vorgesehen ist, das in eine Vertiefung oder Durchgangsöffnung in dem Stimelement einrastet.

Um die Greifbacken erst dann auszufahren, wenn der Greifer vollständig auf der Last aufsitzt, wird vorgeschlagen, dass ein ringförmiges Schaltelement verwendet wird, welches bei vollständig auf der Last aufgesetzten Greifer ein Schaltsignal abgibt.

Eine sehr kostengünstige Ausführung des Greifers sieht vor, dass die plattenförmigen Elemente der Greifbacken und die u-förmigen Bleche mittels eines Lasers aus einem Blech geschnitten sind.

Herstellungstechnisch einfach und kostengünstig ist es, wenn der Dom rotationssymmetrisch und die Tragöffnung zylinderförmig sind.

Die Erfindung wird nachfolgend anhand eines in einer Zeichnung dargestellten Ausführungsbeispiels näher beschrieben. Es zeigen:
- Fig. 1a, 1b: eine Vorderansicht und Draufsicht eines Greifers mit Winkelprofilen als Längsträger,
- Fig. 2: einen Greifer mit lösbarer Kolben-Zylindereinheit und mit u-förmigen Blechen als Längsträger,
- Fig. 3: die lösbare Kolben-Zylindereinheit gemäß Fig. 2 allein,
- Fig. 4: den Greifer gemäß Fig. 2 in drei Ansichten ohne Kolben-Zylindereinheit,
- Fig. 5: die u-förmigen Bleche der Längsträger gemäß Fig. 2 und
- Fig. 6: eine alternative Ausführung der Vertiefung mit Blattfeder gemäß Fig. 1 und 2.

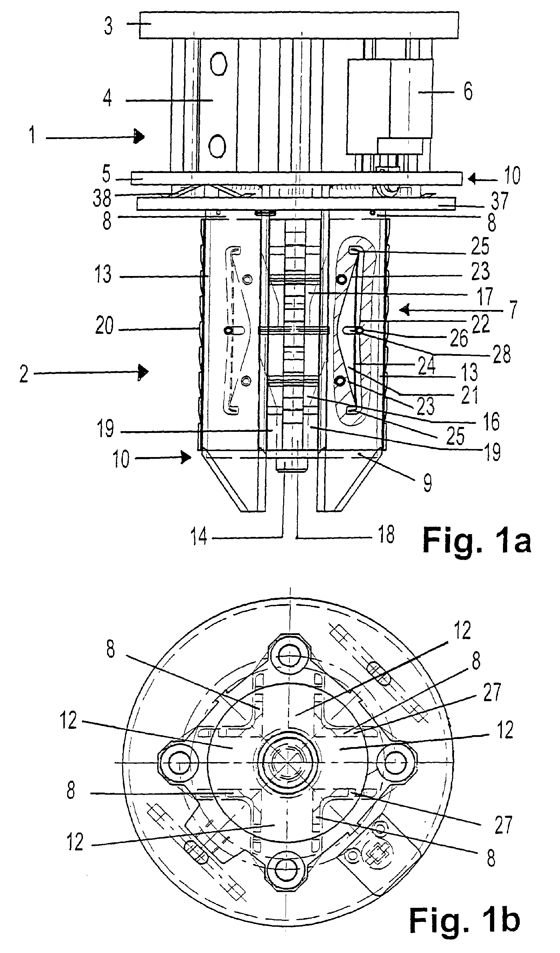

Fig. 1a, 1b zeigen eine Vorderansicht und Draufsicht eines aus einer oberen Kolben-Zylindereinheit 1 und einer unteren Greifeinheit 2 bestehenden Greifers.

Die Kolbenzylinder-Einheit 1 weist eine obere Flanschplatte 3 auf, an der ein sich nach unten erstreckender Pneumatikzylinder 4 befestigt ist. An seinem unteren Ende ist der Pneumatikzylinder 4 mit einer oberen Stimplatte 5 der Greifeinheit fest verbunden. Weiter zeigt Fig. 1 auf der rechten Seite dem Pneumatikzylinder 4 gegenüberliegend eine Schalteinheit 6. Mittels des Pneumatikzylinders 4 sind die Stimplatte 5 und die Flanschplatte 3 gegenläufig zueinander bewegbar.

Die Greifeinheit 2 besteht aus einem Rahmen 7, der aus vier rechtwinkligen Längsprofilen (Winkelprofilen) als Längsträger 8 und der Stirnplatte 5 (oben) sowie dem Stemblech 9 (unten) als plattenförmige Stimelemente 10 gebildet ist, wobei die Stirnelemente 10 und die Längsträger 8 beispielsweise durch Schweißen fest miteinander verbunden sind. Die Längsträger 8 sind gemäß Fig. 1b im gleichen radialen Abstand von der Mittellinie 11 sowie im gleichen Winkelabstand (90 Grad) zueinander angeordnet. Fig. 1b lässt erkennen, dass zwischen den Außenseiten zweier benachbarter Längsträger 8 jeweils ein Schacht 12 ausgebildet ist. Nach oben und unten sind die Schächte 12 von den Stirnelementen 10 begrenzt. Die Greifeinheit 2 weist weiter vier Greifbacken 13 auf, welche in den Schächten 12 radial verschieblich geführt und axial festgelegt sind.

In der Mitte zwischen den Längsträgem 8 ist ein vorzugsweise rotationssymmetrischer Dorn 14 zu sehen, der parallel zu den Längsträgem 8 ausgerichtet ist. Der Dorn 14 ist durch eine Öffnung 5 im Stimelement 10 (Stimplatte 5) aus dem Rahmen 7 heraus nach oben in die Kolben-Zylindereinheit 1 geführt, wo er an der Flanschplatte 3 befestigt ist. Auf diese Weise führt eine vom Pneumatikzylinder 4 bewirkte Bewegung der Flanschplatte 3 relativ zum Stimelement 10 (Stirnplatte 5) zu einer Längsverschiebung des Doms 14 innerhalb des Rahmens 7.

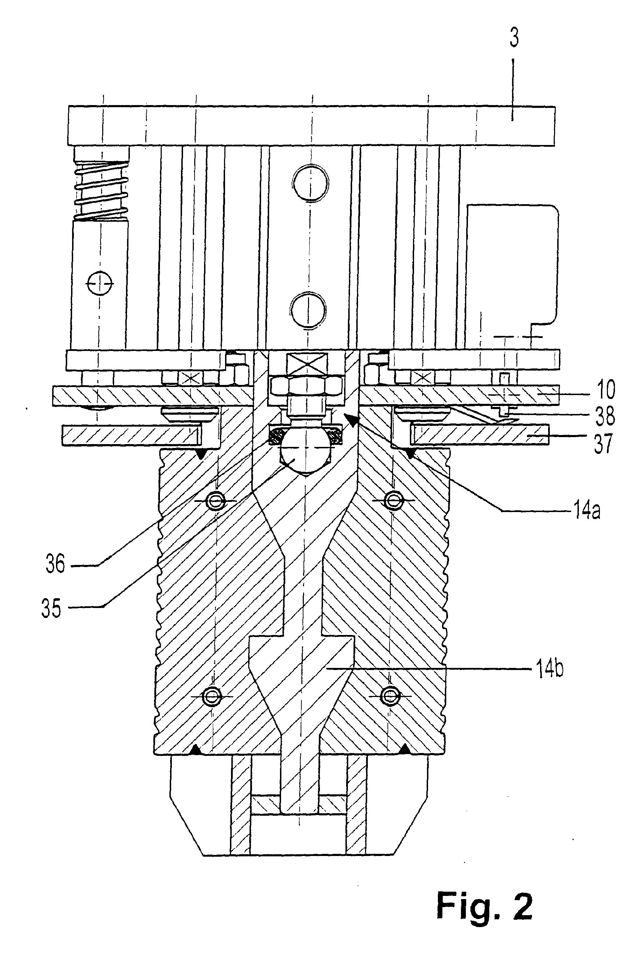

Innerhalb des Rahmens 7 weist der Dom 14 zwei konische Verjüngungen 16, 17 auf; die in Fig. 1a gestrichelt dargestellt sind (s. auch Fig. 2). Auf ihrer dem Dom 14 zugewandten Seite liegen die Greifbacken 13 federkraftbeaufschlagt an der Mantelfläche des Doms 14 an. Die Anlageflächen der Greifbacken 13 sind komplementär zur Mantelfläche des Doms 14 ausgebildet, und zwar zumindest im Anlagebereich, d. h. zumindest entlang der Anlagelinie.

Die beiden Verjüngungen 16, 17 und die komplementären Anlageflächen der Greifbacken 13 bewirken, dass ein Längsverschiebung des Dorns 14 jeweils in eine Radialbewegung der Greifbacken umgewandelt wird.

Wie Fig. 1a zeigt, besteht jede Greifbacke 13 aus einem Mittelblech als plattenförmiges Mittelelement 18, an dem auf beiden Seiten eine Seitenblech als plattenförmiges Seitenelement 19 angeordnet ist. Jede Greifbacke 13 besteht somit aus drei aneinander befestigten Blechen. Vorzugsweise liegt nur das Mittelelement 18 an dem Dorn 14 an. Gemäß Fig. 1a ist insbesondere das Mittelelement 18 mit nach außen weisenden Greifzähnen 20 versehen.

Jedes Seitenelement 19 ist aus Blechen hergestellt und weist eine Vertiefung 21 auf, die insbesondere in Fig. 1a in dem dargestellten Durchbruch zu erkennen ist. Herstellungstechnisch wird die Vertiefung 21 vorzugsweise dadurch erzeugt, dass diese aus den Seitenelementen 19 als Durchgangsöffnung mit entsprechender Querschnittsform herausgeschnitten ist. Nach Befestigen der Seitenelemente 19 am Mittelelement 18 beispielsweise durch Verschweißen erhält man eine Vertiefung 21, die zur Außenseite der Greifbacke 13 weist und auf dieser Seite offen ist. Abgedeckt wird die Vertiefung 21 durch den unmittelbar gegenüberliegenden Längsträger 8.

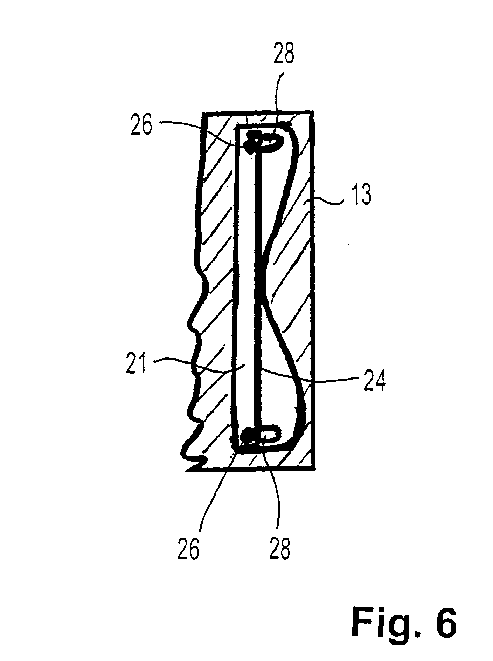

Fig. 1a zeigt, dass die Querschnittsform der längsgeschnittenen Vertiefung 21 in etwa dem eines gleichschenkligen Dreiecks entspricht, mit einer parallel zu den Längsträgern 8 verlaufenden Basisseite 22 und zwei nach innen zum Dorn hin gerichteten kleineren Dachseiten 23 etwa gleicher Länge, so dass auch die Spitze des Dreiecks nach innen weist. In die Vertiefung 21 ist eine Blattfeder 24 eingesetzt, deren abgewinkelte Enden in Aufnahmen 25 eingreifen, die an den Enden der Basisseite 22 ausgebildet sind. An der Außenseite der Blattfeder 24 liegt ein Stift als Spannelement 26 an, der in den Längsträgem 8 an den Stellen 27 (s. Fig. 1b) befestigt ist. Das Spannelement 26 kann selbstverständlich durch die gesamte Greifbacke 13 hindurchgeführt sein. Zur Sicherung der radialen Beweglichkeit der Greifbacken 13 sind diese mit einem Langloch 28 versehen durch das das Spannelement 26 hindurchgeführt ist. Eine Bewegung der Greifbacken 13 nach außen (durch eine Längsverschiebung des Doms 14) führt folglich zu einem Spannen der Blattfeder 24, die eine zur Verschiebung korrespondierende Rückstellkraft bewirkt. Eine komplementäre Ausführung der Vertiefung ist in Fig. 6 gezeigt.

Fig. 2 zeigt einen Greifer gemäß Fig. 1, bei dem die Kolben-Zylindereinheit 1 nach Art eines Bajonettverschlusses mit dem oberen Stirnelement 10 (Stimplatte 5) verbindbar ist, um die Greifeinheit 2 schnell gegen eine andere auswechseln zu können.

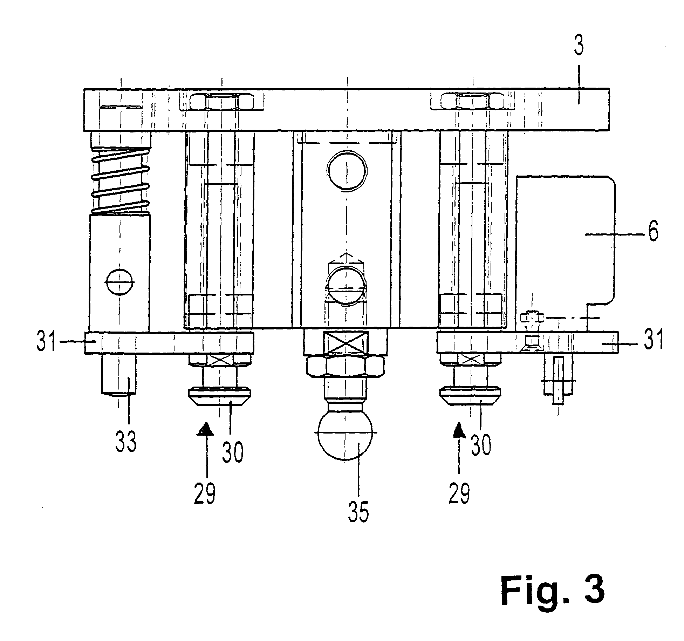

Die von der Greifeinheit 2 abgenommene Kolben-Zylindereinheit 1 ist in Fig. 3 dargestellt, sie zeigt mehrere zapfenförmige Verschlusselemente 29, die sich in Zylinderlängsrichtung des Pneumatikzylinders 4 durch das Stirnelement 10 (Stimplatte 5) hindurch (s. Fig. 2) nach unten in den Rahmen 7 hineinerstrecken, also über die eigentliche Außenkontur der Kolben-Zylindereinheit 1 hinausgeführt sind. Die freien unteren Enden der Verschlusselemente 29 weisen eine ringförmige Verdickung 30 auf. Bei der Fertigung wird die Verdickung 30 dadurch hergestellt, dass ein an der Flanschplatte 3 befestigter Bolzen an seinem unteren Ende mit einer Ringnut versehen wird. Der Bolzen ist zusätzlich auf der der Flanschplatte 3 gegenüberliegenden Seite an einer Tragplatte 31 befestigt.

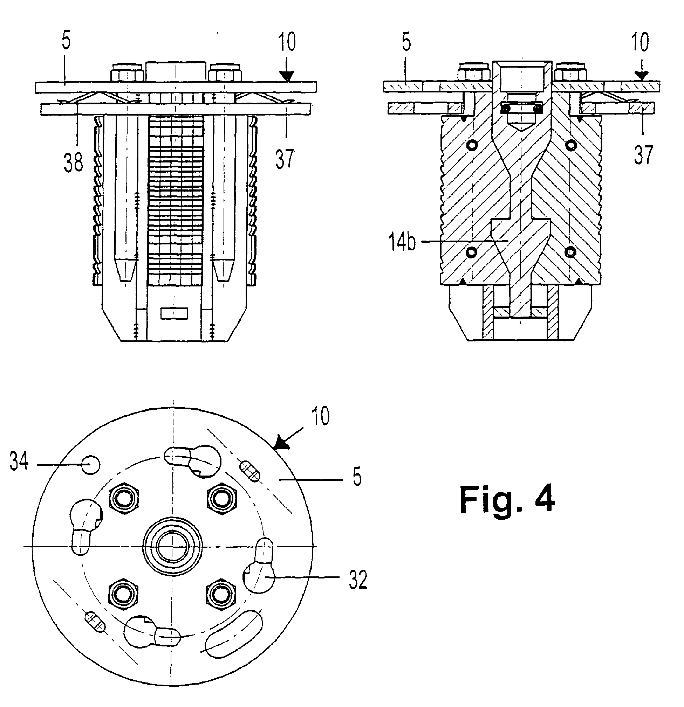

Fig. 4 zeigt die zugehörige Greifeinheit 2. Insbesondere zeigt die Draufsicht in Fig. 4 Durchgangsöffnungen 32 im Stirnelement 10 (Stirnplatte 5), die als Langlöcher ausgebildet sind, welche sich in Umfangsrichtung - bezogen auf Fig. 4 entgegen dem Uhrzeigersinn - verjüngen. Die Anordnung der Durchgangsöffnungen 32 korrespondiert zu der der Verschlusselemente 29, die mit ihren Verdickungen 30 durch den nicht verjüngten Teil der Durchgangsöffnungen 32 hindurchsteckbar sind. Eine Verdrehung der gesamten Kolben-Zylindereinheit 1 um die Mittellinie 11 bzw. den Dorn 14 bewirkt ein Hineindrehen der Verschlusselemente 29 in die Verjüngung, so dass diese in die Nut der Verschlusselemente 29 eingreifen und die Kolben-Zylindereinheit 2 axial sichern. In der Endstellung rastet ein federkraftbeaufschlagter Zylinder 33 (s. Fig. 3) in eine am Stirnelement 10 (Stirnplatte 5) vorgesehene Durchgangsbohrung 34 ein, die für eine radiale Sicherung der Kolgen-Zylindereinheit 1 sorgt.

Wie Fig. 2 - 4 zeigen, ist der Dorn 14 zweistückig ausgebildet. Der Dorn 14 besteht hierbei aus einem oberen Domelement 14a und einem unteren Dornelement 14b, die lösbar miteinander verbunden sind. Die Verbindung erfolgt mittels eines am unteren Ende des oberen Dornelements 14a angeordneten Kugelkopf 35, der in eine korrespondierende Vertiefung des unteren Dornelements 14b einrastend einsteckbar ist. Als Rastelement dient ein Federelement 36. Dieses hat lediglich die Aufgabe, Vertikalkräfte vom oberen Dornelement 14a auf das untere 14b beim Herausziehen des Dorns 14 aus dem Rahmen 7 zu übertragen. Das obere Domelement 14a ist gemäß Fig. 2 in der Kolben-Zylindereinheit 1 und das untere 14b im Rahmen 7 angeordnet.

Weiter ist in Fig. 1a, 1b und 2 unterhalb des Stirnelements 10 (Stimplatte 5) ein in Dornlängsrichtung beweglicher Schaltring 37 vorgesehen, der mittels Federn 38 vom Stirnelement 10 weggedrückt wird. Wie insbesondere aus Fig. 2 gut erkennbar ist, betätigt der Schaltring 37 ein Schaltelement 38 der Schalteinheit 6. Der Schaltring 37 ist radial nicht drehbar, also drehfest angeordnet und bewirkt bei einem vollständig auf der Last aufgesetzten Greifer ein Schaltsignal. Außerdem greifen die Verdickungen 30 dabei in hierfür im Schaltelement 37 vorgesehene Durchgangsöffnungen ein, so dass eine zusätzliche Sicherheitsverriegelung der Kolben-Zylindereinheit 1 erfolgt.

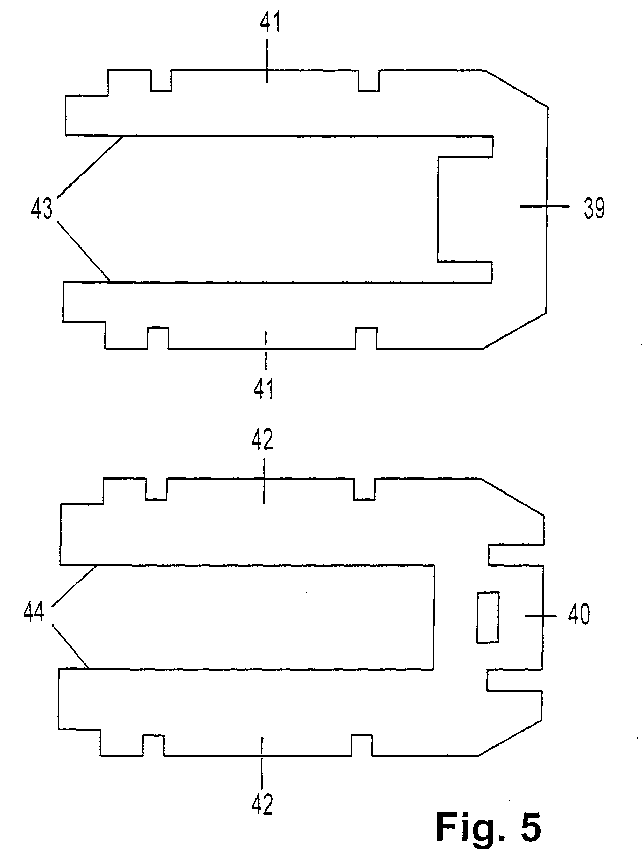

Während Fig. 1a, 1b einen Rahmen zeigen, der aus Winkelprofilen als Längsträger 8 gebildet ist, zeigen die Fig. 2 und 4 einen Rahmen 7, der aus u-förmigen Blechen 39, 40 besteht; diese sind in Fig. 5 dargestellt. Jedes Blech 39, 40 weist zwei Schenkel 41, 42 auf. Der Abstand der beiden einander gegenüberliegenden Innenseiten 43, 44 der Schenkel 41, 42 ist so gewählt, dass jeweils zwei Paare von Blechen 39, 40 derart ineinander steckbar sind, dass diese jeweils um einen Winkel von 90° versetzt zueinander angeordnet sind, wobei sich jeweils dieselben Bleche 39 oder 40 paarweise gegenüber liegen. Vier entsprechend zusammengesteckte Bleche 39, 40 weisen in ihrem Innern einen zentralen Freiraum auf, in den zumindest der untere Teil des Doms 14b einführbar ist. Die Schenkel 41, 42 bilden bei dieser Ausführung die Längsträger 8. Die relativ komplizierte Kontur der Bleche 39, 40 ist kostengünstig mittels eines Lasers aus einem Blech herausgeschnitten.

Die Greifeinheit 2 wird in eine beispielsweise zylindrische Tragöffnung eingeführt, um die Last zu greifen. Der an dem Seil hängende Greifer dient vorzugsweise dazu, Lasten von oben zu greifen. Selbstverständlich sind auch andere Anwendungsfälle denkbar.

### Bezugszeichenliste:

- 1: Kolben-Zylindereinheit
- 2: Greifeinheit
- 3: Flanschplatte
- 4: Pneumatikzylinder
- 5: Stimplatte
- 6: Schalteinheit
- 7: Rahmen
- 8: Längsträger
- 9: Stirnblech
- 10: Stimelement
- 11: Mittellinie
- 12: Schacht
- 13: Greifbacke
- 14: Dorn
- 14a: Domelement (oberes)
- 14b: Domelement (unteres)
- 16: Verjüngung
- 17: Verjüngung
- 18: Mittelelement
- 19: Seitenelement
- 20: Greifzahn
- 21: Vertiefung
- 22: Basisseite
- 23: Dachseite
- 24: Blattfeder
- 25: Aufnahme
- 26: Spannelement
- 27: Spannelementbefestigungsstelle
- 28: Langloch
- 29: Verschlusselement
- 30: Verdickung
- 31: Tragplatte
- 32: Durchgangsöffnung
- 33: Zylinder
- 34: Durchgangsbohrung
- 35: Kugelkopf
- 36: Federelement
- 37: Schaltring
- 38: Schaltelement

## Patentansprüche

1. Greifer mit vier radial nach außen bewegbaren Greifbacken für - insbesondere von oben zu greifende - mit einer Tragöffnung versehene Lasten, mit einem Rahmen, in dem die Greifbacken radial beweglich geführt und axial festgelegt sind und der vier beabstandete parallele Längsträger aufweist, die in gleichem radialen Abstand als auch in gleichem Winkelabstand zueinander angeordnet sind und deren Enden oben und unten jeweils über ein plattenförmiges Stimelement fest miteinander verbunden sind,
wobei die Längsträger und die Stimelemente vier radial nach außen verlaufende Schächte zur Aufnahme der Greifbacken bilden, mit einem mittig zwischen den Längsträgern parallel zu diesen angeordneten und durch eine Öffnung im oberen Plattenelement nach außen geführten Dom, der sich innerhalb des Rahmens zumindest über einen Teil seiner Länge nach unten konisch verjüngt und mittels einer am oberen Plattenelement fest angeordneten Kolben-Zylindereinheit längsverschiebbar ist,
wobei die Greifbacken jeweils radial kraftbeaufschlagt von einer Rückstellfeder am Dorn anliegen und
wobei die Anlageflächen der Greifbacken zumindest im Anlagebereich komplementär zur Mantelfläche des Doms ausgebildet sind, so dass eine Längsverschiebung des Dorns jeweils in eine Radialbewegung der Greifbacken umgewandelt wird,
**dadurch gekennzeichnet,**
**dass** jede Greifbacke (13) aus einem plattenförmigen Mittelelement (18) und mindestens zwei parallelen, an diesem seitlich angeordneten plattenförmigen Seitenelementen (19) gebildet ist,
die jeweils eine zur Außenseite der Greifbacke (13) weisende Vertiefung (21) aufweisen,
**dass** der Querschnitt der Vertiefung (21) jeweils mit Blickrichtung auf die Seitenfläche des Seitenelements (19) entweder eine Form nach Art eines gleichschenkligen Dreiecks mit einer parallel zu den Längsträgern (8) verlaufenden Basisseite (22) und zwei nach innen zum Dorn (14) hin gerichteten kleineren gleichlangen Dachseiten (23) aufweist, wobei die beiden Enden der Basisseite (22) mit Aufnahmen (25) für die Enden einer einsetzbaren Blattfeder (24) versehen sind, an deren Außenseite mittig ein am zugeordneten Längsträger (8) vorgesehenes, in die Vertiefung (21) eingreifendes Spannelement (26) anliegt,
oder
**dass** der Querschnitt einen weg vom Dom (14) in die Vertiefung (21) hinein gerichteten Vorsprung aufweist, dem eine parallel zu den Längsträgern (8) verlaufende Längsseite gegenüberliegt, zu der die Blattfeder (24) im entspannten Zustand parallel verläuft, und dass an den Enden der Blattfeder (24) je ein in die Vertiefung (21) eingreifendes, am zugeordneten Längsträger (8) angeordnetes Spannelement (26) befestigt ist,
wobei das Spannelement (26) und der Vorsprung jeweils eine zur Bewegung der Greifbacke (13) nach außen korrespondierende Rückstellkraft bewirkt,
**dass** die Stimelemente (10) aus Blechen (39, 40) gebildet sind,
**dass** die Längsträger (8) entweder aus Längsprofilen oder aus den Schenkeln (41, 42) von mindestens vier u-förmigen Blechen (39, 40) gebildet sind, wobei die Bleche (39, 40) unter Belassung eines zentralen Freiraums mit quadratischem Querschnitt jeweils um einen Winkel von 90 Grad um die Längsachse des Dorns (14) versetzt zueinander angeordnet sind.

2. Greifer nach Anspruch 1,
**dadurch gekennzeichnet,**
**dass** die Kolben-Zylindereinheit (1) mittels eines Verschlusses nach Art eines Bajonettverschlusses mit dem oberen Stirnelement (10) verbindbar ist.

3. Greifer nach Anspruch 2,
**dadurch gekennzeichnet,**
**dass** der Dom (14) aus einem oberen und einem unteren Dornelement (14b) gebildet ist, welche lösbar miteinander verbindbar sind, wobei das obere Domelement (14a) in der Kolben-Zylindereinheit (1) und das untere im Rahmen (7) angeordnet ist.

4. Greifer nach einem der Ansprüche 2 - 3,
**dadurch gekennzeichnet,**
**dass** der Verschluss aus an der Kolben-Zylindereinheit (1) angeordneten, sich in Zylinderlängsrichtung über die Außenkontur hinaus erstreckenden zapfenförmigen Verschlusselementen (29) mit verdicktem Ende gebildet ist, die in korrespondierende sich in Umfangsrichtung verjüngende Durchgangsöffnungen (32) des Stimelements (10) hindurchsteckbar und durch Verdrehung der gesamten Kolben-Zylindereinheit (1) in die Verjüngung (16, 17) hineindrehbar sind.

5. Greifer nach einem der Ansprüche 2 - 4,
**dadurch gekennzeichnet,**
**dass** zur Verriegelung an der Kolben-Zylindereinheit (1) ein Verriegelungselement vorgesehen ist, das in eine Vertiefung (21) oder Durchgangsöffnung (32) in dem Stimelement (10) einrastet.

6. Greifer nach einem der Ansprüche 1 - 5,
**dadurch gekennzeichnet,**
**dass** ein ringförmiges Schaltelelement vorgesehen ist, das bei vollständig auf der Last aufgesetztem Greifer ein Schaltsignal abgibt.

7. Greifer nach einem der Ansprüche 1 - 6,
**dadurch gekennzeichnet,**
**dass** die Mittelelemente (18), die Seitenelemente (19), die Stimelemente (10) und die u-förmigen Bleche (39, 40) aus lasergeschnittenen Blechen gebildet sind.

8. Greifer nach einem der Ansprüche 1 - 7,
**dadurch gekennzeichnet,**
**dass** der Dom (14) rotationssymmetrisch und die Tragöffnung zylinderförmig ist.
